# EUROPÄISCHE PATENTSCHRIFT

(11) **EP 1 087 665 B1**
(45) Veröffentlichungstag und Bekanntmachung des Hinweises auf die Patenterteilung: **26.03.2003**
(21) Anmeldenummer: 99920679.0
(22) Anmeldetag: 16.04.1999
(51) Int. Cl.: A22C 13/00

(54) **VERFAHREN ZUR HERSTELLUNG VON TRANSPARENT EINGEFÄRBTEN CELLULOSEHÜLLEN**
METHOD FOR PRODUCING TRANSPARENT, COLOURED CELLULOSE SLEEVES
PROCEDE POUR LA FABRICATION D'ENVELOPPES CELLULOSIQUES COLOREES TRANSPARENTES

(30) Priorität: 28.04.1998 DE 19818891
(43) Veröffentlichungstag der Anmeldung: 04.04.2001
(73) Patentinhaber: Wolff Walsrode AG, 29655 Walsrode (DE)
(72) Erfinder: BLUMENBERG, Klaus-Dieter, D-29664 Walsrode (DE); NEUSCHULZ, Willi, D-29683 Fallingbostel (DE)
(74) Vertreter: Pettrich, Klaus-Günter, Dr.
(86) Internationale Anmeldenummer: EP9902553
(87) Internationale Veröffentlichungsnummer: WO99055164

(56) Entgegenhaltungen:
- EP-A- 0 156 237
- US-A- 2 043 069
- US-A- 2 521 101
- US-A- 3 149 905
- US-A- 3 293 340
- DATABASE WPI Section Ch, Week 8903 Derwent Publications Ltd., London, GB; Class A11, AN 82-05622J XP002113884 & JP 57 176158 A (TOHO CELLOPHANE KK), 29. Oktober 1982 (1982-10-29)

## Beschreibung

Die Erfindung bezieht sich auf ein Verfahren zur Herstellung von schlauchförmigen, eingefärbten Nahrungsmittelhüllen, insbesondere Cellulosefaserdärmen, mit hoher Transparenz und Gleichmäßigkeit der Einfärbung, ferner auf die erfindungsgemäß hergestellten schlauchförmigen Nahrungsmittelhüllen und deren Verwendung.

Schlauchförmige Nahrungsmittelhüllen werden in großem Umfang zur Herstellung einer Vielzahl von Fleischprodukten verwendet. Diese Nahrungsmittelhüllen sind im allgemeinen dünnwandige Schläuche mit verschiedenen Durchmessern, die in bekannter Weise in vielen Fällen aus regenerierter Cellulose hergestellt werden. Cellulosehüllen können auch mit darin eingebetteten faserigen Geweben als Cellulosefaserdärme hergestellt werden.

Das Aussehen der unter Verwendung von Cellulosefaserdärmen hergestellten Würste ist ein wichtiger Faktor für das Ansprechen der Verbraucher, wobei eine Vielzahl der Produkte geräuchert wird, um eine charakteristische braune Färbung zu erhalten. Auch das Einfärben von Cellulosefaserdärmen ist üblich, wobei Farbpigmente und Farbstoffe eingesetzt werden. Insbesondere bei Rohwürsten mit grobkörniger Brätstruktur, wie z.B. Salami, ist ein klares Durchscheinen der Fleisch- und Speckbrocken durch die Wursthülle erwünscht um ein verkaufsförderndes Aussehen zu erreichen. Bei üblichen Pigmenteinfärbungen von Cellulosefaserdärmen wird die Transparenz der Wursthüllen durch die diffuse Lichtbrechung an den relativ großen Farbteilchen stark reduziert.

Es ist bekannt, Cellulosefolien und insbesondere Cellulosefasem mit sogenannten Küpenfarbstoffen einzufärben. Die Küpenfarbstoffe sind Verbindungen mit indigoider bzw. anthrachinoider Struktur und in Wasser unlöslich. Sie erfordern ein besonderes Färbeverfahren, das in seinen Grundzügen seit langem bekannt ist. Dabei wird zunächst unter Anwendung von Reduktionsmitteln, wie Natriumhydrogensulfit, Natriumdithionit, Natriumhydroxymethansulfinat oder Natriumborhydrid, der Küpenfarbstoff in seine vollständig laugelösliche Leukoform überführt. In diese als Küpe bezeichnete Farbflotte wird das zu färbende Cellulosematerial eingetaucht oder hindurchgeführt. Die hohe Celluloseaffinität der Leukofarbstoffe bewirkt eine hohe Färbegeschwindigkeit an der Oberfläche des Cellulosematerials, was bei Verwendung von Farbstoffmischungen mit unterschiedlichen Celluloseaffinitäten der Leukofarbstoffe zu Ungleichmäßigkeiten der Einfärbung führen kann. Es folgt die Diffusion der Leukofarbstoffe in das Innere des Cellulosematerials, wobei die Diffusion durch Temperaturerhöhung beschleunigt wird. Nach dem Spülen des Materials erfolgt die Oxidation, wobei sich aus der Leukoform der ursprüngliche, wasserunlösliche Farbstoff wieder zurückbildet, der gut auf dem Cellulosematerial haftet. Geeignete Oxidationsmittel sind zum Beispiel Luftsauerstoff, Wasserstoffperoxid. Natriumperborat und Kaliumdichromat.

So ist im US-Patent Nr. 3 149 905 das Einfärben und Bedrucken von cellulosehaltigen Textilmaterialien mit Küpenfarbstoffen beansprucht, wobei die patentgemäß eingesetzten Küpenfarbstoffe Sulfonsäureamidgruppen enthalten. Das Einfärben erfolgt in üblichen Tauchbädern.

Im US-Patent 2 043 069 ist das Einfärben von Cellulosematerialien aus regenerierter Cellulose, Celluloseestern und Celluloseethern beansprucht. Bei diesem Verfahren wird der Küpenfarbstoff in seiner ungelösten Form mit der Celluloseausgangsverbindung vermischt und die Koagulation und Regenerierung durchgeführt. Anschließend durchläuft das regenerierte Cellulosematerial Reduktions- und Oxidationsbäder zum Lösen und Fixieren der Küpenfarbstoffe.

Ein sehr ähnliches Verfahren ist in der Deutschen Offenlegungsschrift 2 262 611 für die Herstellung von Cellulosefolien beansprucht. Hier wird der Küpenfarbstoff in seiner ungelösten Form mit der Viskose vermischt, die Regenerierung durchgerührt und anschließend in Reduktions- und Oxidationsbäder das Lösen und Fixieren des Küpenfarbstoffs durchgeführt.

Vergleichbare Einfärbeverfahren mit Küpenfarbstoffen wurden aber bisher nicht auf die Produktgruppe der Cellulosefaserdärme angewendet.

Ein Verfahren zur Einfärbung von Cellulosefaserdarm im Gelzustand in Färbebädern ist im US-Patent 3 383 443 beansprucht. Hierbei werden jedoch keine Küpenfarbstoffe, sondern Naphtholfarbstoffe eingesetzt, die mit stabilisierten Diazoverbindungen fixiert werden.

Schließlich beschreibt US-Patent 3 293 340 ein Färbeverfahren mit Küpenfarbstoffen für die Herstellung von transparent eingefärbten, regenerierten Cellulosehüllen. Bei diesem Verfahren wird der noch ungelöste Küpenfarbstoff in Form einer Pigmentpaste mit der Viskose vermischt und daraus ein Celluloseregeneratschlauch hergestellt, der in üblicher Weise in sauren Fällbädern regeneriert und anschließend gewaschen wird. Die Verwendung eines zusätzlichen Entschwefelungsbades vor oder nach der Reduktionsstufe wird empfohlen. Der Schlauch wird nachfolgend durch ein alkalisches Reduktionsbad geführt, wobei der Küpenfarbstoff in die laugelösliche Leukoform überführt wird. Das Reduktionsbad enthält zusätzlich 100 bis 150 g/l Natriumchlorid, um die Migration der löslichen Leukoform aus dem Schlauch zu unterdrüeken. Anschließend erfolgt die Zurückführung der Leukoform in die unlösliche Form durch Oxidation mit Luftsauerstoff in einem speziellen Kanal, in dem Wasser auf den Schlauch gesprüht wird, um durch Entfernung des Reduktionsmittels die Oxidation zu erleichtern. Anschließend wird der Schlauch erneut gewaschen und vorzugsweise durch ein weiteres Säurebad mit einer Konzentration von 1.5 bis 7,5 g Schwefelsäure pro Liter geführt, um die Reste von Natriumhydroxid zu neutralisieren und dadurch den Schlauch in der folgenden, erneuten Waschstufe wirksamer auswaschen zu können. Dann erfolgt die übliche Behandlung mit Weichmachern in einem Glyzerinbad und abschließend die Trocknung.

Der Prozeß gemäß US-Patent 3 293 340 ist durch die Verwendung der zusätzlichen Prozeßstufen des Reduktionsbades, der Oxidationskammer, der Zwischenwäsche, der nachfolgenden Säurebehandlung und der erneuten Wäsche gegenüber dem üblichen Verfahren zur Herstellung von faserverstärkten Cellulosehüllen investitionintensiv und wegen der notwendigen Konzentrationsregelung im Reduktions- und Säurebad sehr aufwendig und insgesamt betrachtet zusätzlich abwasserbelastend. Bei Anwendung eines Reduktionsbades kann die unerwünschte Oxidation des Reduktionsmittels durch Luftsauerstoff wegen der großen Luftkontaktfläche nicht vermieden werden. Es wird deshalb wesentlich mehr Reduktionsmittel verbraucht, als für die Überführung der Farben in die Leukoform notwendig ist, wodurch das Abwasser zusätzlich belastet wird. Insbesondere die im diskutierten Patent erfindungsgemäß beanspruchte hohe Konzentration von Natriumchlorid im Reduktionsbad führt zu einer zusätzlichen Abwasserbelastung, die im Hinblick auf den heute üblicherweise praktizierten Umweltschutz als sehr problematisch anzusehen ist.

In diesem Verfahren hat außerdem der Diffusionsprozeß des Reduktionsmittels in den regenerierten Schlauch einen entscheidenden Einfluß auf die Gleichmäßigkeit und Transparenz der erzielten Einfärbung. Dies führt zu Schwierigkeiten bei der Anwendung des Verfahrens, da Cellulosefaserdärme üblicherweise kaliberabhängig mit unterschiedlich dickem Faservlies und unterschiedlichen Viskoseauftragsmengen hergestellt werden. Einflußgrößen auf die Diffusionsgeschwindigkeit sind neben der Dicke des Regeneratschlauches die Temperatur und Konzentration des Reduktionsbades. Insbesondere wenn verschieden eingefärbte Schläuche unterschiedlicher Kaliber gleichzeitig durch ein Reduktionsbad geführt werden, sind diese Einflüsse kaum zu beherrschen.

Es war somit Aufgabe der vorliegenden Erfindung, ein Verfahren für die Herstellung von eingefärbten, schlauchförmigen Nahrungsmittelhüllen aus Celluloseregenerat beschichtetem Faservlies, insbesondere Cellulosefaserdärmen, mit hoher Transparenz und Gleichmäßigkeit der Einfärbung zu schaffen, das mit geringem technischen Aufwand durchführbar ist. Insbesondere sollen die eingesetzten Chemikalienmengen möglichst gering sein, um Umweltbelastungen zu minimieren.

Die Aufgabe wird gelöst durch das in Anspruch 1 genannte Verfahren. Die Ansprüche 2 bis 6 geben bevorzugte Ausführungsformen des Verfahrens an. Die Aufgabe wird ferner gelöst durch das Produkt nach Anspruch 7 sowie seine Weiterbildung nach Anspruch 8 und seine Verwendung nach Anspruch 9.

Es wurde überraschend gefunden, daß man in alkalilösliche Form überführbare Farbstoffe, insbesondere Küpenfarbstoffe, nach chemischer Reduktion in ihrer laugegelösten Leukoform mit Viskose homogen mischen kann und damit eingefärbte, schlauchförmige Nahrungsmittelhüllen aus celluloseregeneratbeschichtetem Faservlies, insbesondere Cellulosefaserdärme, die hohe Transparenz und Gleichmäßigkeit der Einfärbung aufweisen, in einfacher Weise herstellbar sind, indem der zur Erzeugung der Celluloseregeneratschicht verwendeten Viskoselösung eine alkalische Farbflotte zugemischt ist, die mindestens einen vorher durch chemische Reduktion in eine alkalilösliche Form überführten Farbstoff enthält, welcher durch Oxidation in seine unlösliche Form umgewandelt werden kann, mit dem Gemisch aus Viskoselösung und Farbflotte ein schlauchförmiges Faservlies beschichtet wird, die Viskose koaguliert und zu Cellulosehydrat-Gel regeneriert wird und der in der Viskose verteilte Farbstoff durch Oxidation in seine unlösliche Form zurücküberführt wird.

Für das erfindungsgemäße Verfahren werden als Farbstoffe bevorzugt Farbstoffe der Substanzklassen der Anthrachinonderivate, insbesondere Derivate von Anthrimidcarbazol, Acylaminoanthrachinon, Acridon, Benzanthron, Violanthron, Isoviolanthron, Indanthren, sowie Derivate höher kondensierter aromatischer Ringsysteme, bevorzugt Pyrenchinon, Anthanthron, Flavanthron, Pyranthron, Perylentetracarbonsäure, Naphthalintetracarbonsäure sowie Indigoderivate und Thioindigoderivate eingesetzt.

Die mit dem erfindungsgemäßen Verfahren hergestellte, eingefärbte, schlauchförmige Nahrungsmittelhülle ist insbesondere als künstliche Wursthülle geeignet und kann zusätzlich an der Außen- oder Innenoberfläche mit einer Barriereschicht versehen werden. Besonders bevorzugt werden nach dem erfindungsgemäßen Verfahren hergestellte Nahrungsmittelhüllen als künstliche Wursthülle für Rohwurst, Brühwurst oder Kochwurst eingesetzt.

Das erfindungsgemäße Verfahren für die Herstellung einer transparent eingefärbten faserverstärkten Cellulosehülle läuft vorzugsweise wie folgt ab:

Handelsübliche Küpenfarbstoffe in Form von Farbteigen oder Pulvern werden vor dem Vermischen mit Viskose in separaten Behältern chemisch reduziert und in Natronlauge gelöst. Beispielsweise wird der Küpenfarbstoff oder Mischungen verschiedener Küpenfarbstoffe als Farbteig oder Pulver vorgelegt und Wasser oder vorzugsweise eine wäßrige Lösung von einem oder mehreren Celluloseethern, insbesondere Carboxymethylcellulose oder Methylencellulose, zugegeben. Bevorzugt werden niedrieviskose Typen dieser Celluloseether verwendet, deren Viskosität von 2 Gew.-% Lösungen vorzugsweise 30 bis 300 mPa·s beträgt. Dazu gibt man eine frisch hergestellte wäßrige Lösung von Natriumdithionit oder Natriumsulfid und Natriumhydroxid. Es ist auch möglich, die Küpenfarbstoffe vorzulegen und die weiteren Substanzen in Wasser gelöst zusammen hinzuzugeben. Die Komponenten werden mit einem Rührwerk vermischt, wobei die Drehzahl so eingestellt wird, daß keine Luftbläschen in die Farbflotte eingebracht werden. Während einer Standzeit von-bevorzugt 12 bis 16 Stunden bei Raumtemperatur werden die Küpenfarbstoffe vollständig zur Leukoform reduziert und lösen sich in der Lauge. Danach wird die Farbflotte kurz aufgerührt und in die Vorlagebehälter von üblichen Viskosefarbmischanlagen eingefüllt. Falls eine Abtönung der Einfärbung erwünscht ist, können bei diesem Verfahren neben Mischungen von Küpenfarbstoffen auch lauge- und säurebeständige Farbpigmente in einem Anteil von 3 bis 12, vorzugsweise 4 bis 7 Gew.-% bezogen auf die gesamte Farbmenge, eingesetzt werden. Hier bewirkt der Zusatz von Celluloseethern neben der durch die Viskositätserhöhung verringerten Geschwindigkeit der Luftsauerstoffaufnahme auch die Dispergierung der unlöslichen Farbpigmente in der Farbflotte. Zur chemischen Reduzierung der Küpenfarbstoffe wird Natriumdithionit oder Natriumsulfid in einer Menge von 10 bis 90, vorzugsweise 20 bis 80 Gew.-% eingesetzt, bezogen auf die reinen Küpenfarbstoffe in der Farbflotte.

In Abhängigkeit von der Löslichkeit der Leukoformen der Küpenfarbstoffe und der gewünschten Einfärbungsintensität, ist die Konzentration der Leukoform in der Farbflotte 1,25 bis 4,4 Gew.-%. Die Konzentration des Natriumdithionits beträgt vorzugsweise 0,7 bis 2,0 Gew.-% und die des Natriumhydroxids 0,3 bis 0,9 Gew.-% in der Farbflotte.

Durch das erfindungsgemäße Verfahren wird nunmehr die Möglichkeit geboten, die Chemikalienmengen den jeweiligen Küpenfarbstoffen genau anzupassen, wodurch deren irreversible Überreduktion vermieden wird. Insbesondere enträllt der Einsatz großer Überschüsse von Reduktionsmitteln, die bei Verwendung von Reduktionsbädern wegen der Oxidalion durch Luftsauerstoff notwendig sind. Durch die geringen Salzkonzentrationen in der Farbflotte wird die Koagulation der Viskose beim Vermischen mit der Farbflotte verhindert. Farbagglomeration in der eingefärbten Wursthülle werden somit vermieden.

Falls längere Lagerzeiten der fertig angesetzten Farbflotte gewünscht werden, sind die Ansatzbehälter möglichst völlig aufzufüllen und luftdicht zu verschließen, um die Oxidation durch Luftsauerstoff zu vermeiden. Die Viskosefarbmischanlagen sind übliche Einrichtungen zur kontinuierlichen Vermischung von Farbflotte mit Viskose. Durch regelbare Förderpumpen wird ein festes Verhältnis zwischen Viskose und zudosierter Farbflotte eingestellt. Der Zusatz der Farbflotte zur Viskose beträgt 2 bis 26, bevorzugt 3 bis 9 Liter, auf 100 kg Viskose. Die Vorlagebehälter der Viskosefarbmischanlagen können luftdicht verschlossen werden und der Gasraum über der Farbflotte mit Stickstoff gespült werden, um bei längeren Produktionsphasen die Oxidation der Farbflotte durch Luftsauerstoff zu unterbinden. Die eingefärbte Viskose wird durch Rohr- oder Schlauchleitungen zu den üblicherweise verwendeten Viskosierdüsen geführt. Hier wird die in Abhängigkeit von dem herzustellenden Schlauchdurchmesser zugeschnittene, schlauchförmig geformte Faservliesbahn mit der eingefärbten Viskose beidseitig oder einseitig vordurchtränkt und beschichtet. Der mit eingefärbter Viskose beschichtete Faservliesschlauch wird durch ein übliches, säure- und salzhaltiges Fällbadsystem geführt, wobei der Schlauch streckenweise völlig in das Bad eingetaucht ist und auch vertikale Luftstrecken durchläuft. Durch die in den Bädern enthaltene Schwefelsäure wird die Viskose in Celluloseregenerat überführt und gleichzeitig die darin enthaltene Leukoform der Indanthrenfarben durch Oxidation mit Luftsauerstoff zum ursprünglichen, unlöslichen Farbstoff zurückbildet, der fest in dem Cellulosematerial haftet. Danach wird der Celluloseregeneratschlauch in üblicher Weise gewaschen, durch ein Weichmacherbad geführt und mit Stützluft getrocknet. Für die Verwendung der Hülle zur Herstellung von Koch- und Brühwurst kann gegebenenfalls auf der Außen- oder Innenseite eine Barriereschicht gegen Luftsauerstoff und Wasserdampf nach bekannten Verfahren aufgebracht werden.

Nach diesem erfindungsgemäß beanspruchten Verfahren können handelsübliche Küpenfarbstoffe eingesetzt werden, die durch chemische Reduktion in eine alkalilösliche Form überführbar sind, wie z. B. das Violanthronderivat Indanthren Brillantgrün (C.I. Teil 1: Vat Green 1, C.I. Teil 2: 59825), das Naphthalintetracarbonsäurederivat Indanthren Brillantorange GR (C.I. Teil 1: Vat Orange 7, C.I. Teil 2: 71105), das Anthanthronderivat Indanthren Brillantorange RF (C.I. Teil 1: Vat Orange 3. C.I. Teil 2: 59300), das Thioindigoderivat Indanthren Brillantrosa R (C.I. Teil 1: Vat Red 1, C.I. Teil 2: 73360), das Violanthronderivat Indanthren Blau (C.I. Teil 1: Vat Blue 20, C.I. Teil 2: 59800), das Benzanthronderivat Indanthren Grau (C.I. Teil 1: Vat Black 8, C.I. Teil 2: 71000), Indanthren Scarlet GG (C.I. Teil 1: Vat Red 14, C.I. Teil 2: 71110), Das Naphthalintetracarbonsäurederivat Indanthren Bordeaux RR (C.I. Teil 1: Vat Red 15, C.I. Teil 2: 71100), Das Acylaminoanthrachinonderivat Indanthren Gelb F3GC (C.I. Teil 1: Vat Yellow 33, C.I. Teil 2: 65430), das Benzpyrenchinon Indanthren Gelb GOK (C.I. Teil 1: Vat Yellow 4, C.I. Teil 2: 59100) und Perylentetracarbonsäure-Derivate wie Paliogenmarron (C.I. Teil 1: Pigment Red 179, C.I. Teil 2: 71130). C.I. bedeutet jeweils Bezeichnung und/oder Konstitutionsnummer gemäß Colour Index, herausgegeben von der Society of Dyers and Colourists.

Farbteige oder Pulver dieser Pigmente werden beispielsweise unter der Bezeichnung Suprafixteige oder Colloisol in den Handel gebracht.

Die Erfindung wird durch die nachfolgenden Beispiele näher erläutert.

### Beispiele

### Beispiel 1

In einem verschließbaren Behälter mit einem Volumen von 30 l werden 30,04 kg einer Farbflotte wie folgt hergestellt:
6 kg handelsübliche Farbstoffanteigung mit einem Gehalt des Farbstoffs Red 179, C.I. 71130, von ca. 22 % (6300 Vocofil Rot. Fa. Ari Chemie) und
210 g Pigment Black 7, C.I. 77266, Pigmentpräparation mit der Bezeichnung Novofil Schwarz BB03, Pigmentgehalt ca. 35 % (wasserunlösliches Pigment)
werden eingewogen. Dazu gibt man eine frisch hergestellte Lösung von
230 g Carboxymethylcellulose (CRT 30 GA. Fa. Wolff Walsrode)
500 g Natriumhydroxidlösung (50 Gew.-%)
600 g Natriumdithionit
in 22,5 kg Wasser.

Die Komponenten werden mit einem Flügelrührer leicht gerührt, wobei die Drehzahl so eingestellt wird, daß keine Luftbläschen in die Farbflotte eingebracht werden. Nach einer Standzeit von 12 Stunden im geschlossenen Behälter wird diese Farbflotte kontinuierlich in konstantem Verhältnis mit Viskose gemischt, in einem Verhältnis von 3,3 l Farbflotte auf 100 kg Viskose. Eine Faservliesbahn mit einer Schnittbreite entsprechend einem Nennkaliber von 58 mm des herzustellenden Cellulosefaserdarmes wird zu einem Schlauch geformt und durch Spinndüsen, wie sie im EP 0 267 489 beschrieben sind, auf der Innen- und Außenseite mit der eingefärbten Viskose vordurchtränkt und beschichtet.

Der Schlauch wird anschließend in einer saure Spinnflüssigkeit koaguliert und zu Cellulosehydrat-Gel regeneriert und gleichzeitig die darin enthaltene Leukoform der Indanthrenfarben durch Oxidation mit Luftsauerstoff zum ursprünglichen, unlöslichen Farbstoff zurückbildet, der fest in dem Cellulosematerial haftet. Die durch die Fällung gebildeten Salze und die aufgenommene Säure wird aus dem Celluloseregeneratschlauch in der anschließenden Wäsche entfernt. Vor der abschließenden Trocknung zu einem Feuchtigkeitsgehalt von etwa 7 Gew.-%, bezogen auf das Gesamtgewicht der Hülle, wird der Cellulosefaserdarm durch ein übliches Weichmacherbad mit Glyzerin geführt.

Mit diesem Cellulosefaserdarm werden Würste vom Salamityp hergestellt. Die Wursthülle zeigt an der fertigen Wurst hohe Transparenz und gleichmäßige Einfärbung.

### Beispiel 2

In analoger Weise wie in Beispiel 1 wird ein Cellulosefaserdarm mit einem Nennkaliber von 50 mm hergestellt, wobei die Reihenfolge der Farbflottenherstellung verändert und die Konzentration der Farbe und des Reduktionsmittels reduziert wurde.

In einem verschließbaren Behälter mit einem Volumen von 30 Litern werden 30,0 kg einer Farbflotte in folgender Weise hergestellt:
- 3,105 kg: einer Anteigung, bestehend aus:
- 3,0 kg: Farbstoffanteigung Red 179, C.I.71130, Pigmentgehalt ca. 22 % (6300 Vocofil Rot, Fa. Ari Chemie) und

- 0,105 kg: Pigmentanteigung Black 7, C.I. 77266, Pigmentgehalt ca. 35 % (wasserunlösliches Pigment)
werden eingewogen. Dazu werden 10,455 kg einer 5 Gew.-% Lösung von Carboxymethylcellulose (CRT 30 GA. Fa. Wolff Walsrode) gegeben.

Unter leichtem Rühren mit einem Flügelrührer, wobei die Drehzahl so eingestellt wird, daß keine Luftbläschen in die Farbflotte eingebracht werden, gibt man dazu eine frisch hergestellte Lösung von 250 g Natriumhydroxidlösung (50 Gew.-%) und 300 g Natriumdithionit in 2,5 kg Wasser.

Nach einer Standzeit von 16 Stunden im geschlossenen Behälter wird diese Farbflotte kontinuierlich mit Viskose gemischt, in einem Verhältnis von 7,0 l Farbflotte auf 100 kg Viskose. Wie im Beispiel 1 beschrieben wird mit der eingefärbten Viskose eine schlauchförmige Faservliesbahn beschichtet, regeneriert und oxidiert, sowie gewaschen, durch ein Weichmacherbad geführt und getrocknet.

Mit diesem Cellulosefaserdarm werden Würste vom Salamityp hergestellt. Die Wursthülle zeigt an der fertigen Wurst hohe Transparenz und eine gleichmäßige Einfärbung, die bezüglich der Intensität den Würsten aus Beispiel 1 entspricht.

### Beispiel 3

In analoger Weise wie in den vorangegangenen Beispielen wird ein Cellulosefaserdarm mit einem Nennkaliber von 50 mm hergestellt, wobei hier die Einfärbung mit einem braunen Küpenfarbstoff erfolgte. Die Reihenfolge der Farbflottenherstellung und die Konzentration des Reduktionsmittels entspricht dem Beispiel 2.

In einem verschließbaren Behälter mit einem Volumen von 30 l werden 30,0 kg einer Farbflotte wie folgt hergestellt:

| | |
|---|---|
| 1,0 kg | einer Indanthrenpigmentanteigung von Vat Brown 57, mit einem Pigmentgehalt von ca. 30 % (223 Vocafil Braunfarbstoff, Fa. Ari Chemie) werden eingewogen. Dazu werden |
| 0,8364 kg | einer 5 Gew.-% Lösung von Carboxymethylcellulose (CRT 30 GA, Fa. Wolff Walsrode) und |
| 12,196 kg | Wasser gegeben. Unter leichtem Rühren mit einem Flügelrührer, wobei Lufteinmischung vermieden wird, erfolgt die Zugabe einer frisch hergestellten Lösung von |
| 200 g | Natriumhydroxidlösung (50 Gew.-%) und |
| 240 g | Natriumdithionit |
| in 2,0 kg | Wasser. |

Nach einer Standzeit von 16 Stunden im geschlossenen Behälter, wird diese Farbflotte kontinuierlich mit Viskose gemischt, in einem Verhältnis von 6,2 1 Farbflotte auf 100 kg Viskose. Mit der eingefärbten Viskose wird eine schlauchförmige Faservliesbahn beschichtet, regeneriert und oxidiert, sowie gewaschen, durch ein Weichmacherbad geführt und getrocknet, wie in Beispiel 1 beschrieben. Mit diesem Cellulosefaserdarm werden Würste vom Salamityp hergestellt. Die Wursthülle zeigt an der fertigen Wurst hohe Transparenz der gleichmäßigen, rotbraunen Einfärbung.

## Patentansprüche

1. Verfahren zur Herstellung von eingefärbten, schlauchförmigen Nahrungsmittelhüllen aus celluloseregeneratbeschichtetem Faservlies, **dadurch gekennzeichnet, daß** der zur Erzeugung der Celluloseregeneratschicht verwendeten Viskoselösung eine alkalische Farbflotte zugemischt ist, die mindestens einen vorher durch chemische Reduktion in eine alkalilösliche Form überführten Farbstoff enthält, welcher durch Oxidation in seine unlösliche Form umgewandelt werden kann, mit dem Gemisch aus Viskoselösung und Farblotte ein schlauchförmiges Faservlies beschichtet wird, die Viskose koaguliert und zu Cellulosehydrat-Gel regeneriert wird und der in der Viskose verteilte Farbstoff durch Oxidation in seine unlösliche Form zurücküberführt wird.

2. Verfahren nach Anspruch 1, **dadurch gekennzeichnet, daß** Farbstoffe der Substanzklassen der Anthrachinonderivate, vorzugsweise Derivate von Anthrimidcarbazol, Acylaminoanthrachinon, Acridon, Benzanthron, Violanthron, Isoviolanthron, Indanthren, sowie Derivate höher kondensierter aromatischer Ringsysteme, bevorzugt Pyrenchinon, Anthanthron, Flavanthron, Pyranthron, Perylentetracarbonsäure, Naphthalintetracarbonsäure sowie Indigoderivate und Thioindigoderivate eingesetzt werden.

3. Verfahren nach Anspruch 1 oder 2, **dadurch gekennzeichnet, daß** zur chemischen Reduzierung der Farbpigmente Natriumdithionit oder Natriumsulfid in einer Menge von 10 bis 90, vorzugsweise 20 bis 80 Gew.-%, bezogen auf den reinen, reduzierbaren Farbstoff in der Farbflotte eingesetzt werden.

4. Verfahren nach Anspruch 1 bis 3, **dadurch gekennzeichnet, daß** der Zusatz der Farbflotte zur Viskose 2 bis 26, bevorzugt 3 bis 9 Liter auf 100 kg Viskose beträgt.

5. Verfahren nach Anspruch 1 bis 4, **dadurch gekennzeichnet, daß** die Farbflotte zusätzlich lauge- und säurebeständige. nicht reduzierbare Farbpigmente in einem Anteil von 3 bis 12, vorzugsweise 4 bis 7 Gew.-%, bezogen auf die Gesamtmenge aus Farbstoff und Farbpigment enthält.

6. Verfahren nach Anspruch 1 bis 5, **dadurch gekennzeichnet, daß** die Farbflotte Celluloseether, vorzugsweise Carboxymethylcellulose und/oder Methylcellulose, enthält.

7. Schlauchförmige Nahrungsmittelhülle, insbesondere künstliche Wursthülle, aus celluloseregcneratbeschichtetem Faservlies, mit einer transparenten Einfärbung nach einem Verfahren der Ansprüche 1 bis 6.

8. Schlauchförmige Nahrungsmittelhülle nach Anspruch 7, **dadurch gekennzeichnet, daß** die Außen- oder Innenoberfläche der Hülle eine für Wasserdampf und Sauerstoff undurchlässige Barriereschicht aufweist.

9. Verwendung der schlauchförmigen Nahrungsmittelhülle nach einem der Ansprüche 7 oder 8 als künstliche Wursthülle für Rohwurst, Brühwurst oder Kochwurst.

## Claims

1. Process for producing coloured tubular food casings formed from fibre web coated with regenerated cellulose, **characterized in that** the viscose solution used to produce the regenerated cellulose coat has been admixed with an alkaline dye liquor which contains at least one dye which has previously been converted into an alkali-soluble form by chemical reduction and which can be converted into its insoluble form by oxidation, the mixture of viscose solution and dye liquor is used to coat a tubular fibre web, the viscose is coagulated and regenerated to form hydrated cellulose gel and the dye distributed in the viscose is converted back into its insoluble form by oxidation.

2. Process according to Claim 1, **characterized in that** dyes are selected from the classes of the anthraquinone derivatives, preferably derivatives of anthrimidecarbazole, acylaminoanthraquinone, acridone, benzanthrone, violanthrone, isoviolanthrone, indanthrone, and also derivatives of more highly fused aromatic ring systems, preferably pyrenequinone, anthanthrone, flavanthrone, pyranthrone, perylenetetracarboxylic acid, naphthalenecarboxylic acid and also indigo derivatives and thioindigo derivatives.

3. Process according to Claim 1 or 2, **characterized in that** the chemical reduction of the colour pigments is effected using sodium dithionite, or sodium sulphide in an amount of 10% to 90% and preferably 20% to 80% by weight, based on the pure reducible dye in the dye liquor.

4. Process according to Claim 1 to 3, **characterized in that** the amount of dye liquor added to the viscose is 2 to 26 and preferably 3 to 9 litres per 100 kg of viscose.

5. Process according to Claim 1 to 4, **characterized in that** the dye liquor additionally contains alkali- and acid-stable, non-reducible colour pigments in a fraction of 3% to 12% and preferably 4% to 7% by weight, based on the total amount of dye and colour pigment.

6. Process according to Claim 1 to 5, **characterized in that** the dye liquor contains cellulose ether, preferably carboxymethylcellulose and/or methylcellulose.

7. Tubular food casing, especially artificial sausage casing, which comprises fibre web coated with regenerated cellulose and has been provided with a transparent coloration by a process of Claims 1 to 6.

8. Tubular food casing according to Claim 7, **characterized in that** the outer or inner surface of the casing comprises a barrier layer which is impervious to water vapour and oxygen.

9. Use of the tubular food casing according to either of Claims 7 and 8 as an artificial sausage casing for raw sausage, scalded sausage or cooked sausage.

## Revendications

1. Procédé de préparation d'emballages colorés et tubulaires pour aliments en non-tissé revêtu de cellulose régénérée, **caractérisé en ce que** l'on ajoute, à la solution de viscose utilisée pour la fabrication de la couche de cellulose régénérée, un bain de teinture alcalin qui contient au moins un colorant transformé au préalable par réduction chimique en forme soluble en milieu alcalin, lequel peut être transformé par oxydation en sa forme insoluble, un non-tissé tubulaire est revêtu du mélange de solution de viscose et de bain de teinture, la viscose coagule et est régénérée en gel d'hydrate de cellulose et le colorant réparti dans la viscose est à nouveau transformé par oxydation en sa forme insoluble.

2. Procédé selon la revendication 1, **caractérisé en ce que** l'on utilise des colorants de la classe des substances des dérivés d'anthraquinone, de préférence des dérivés de carbazole d'anthrimide, d'acylamino-anthraquinone, d'acridone, de benzanthrone, de violanthrone, d'isoviolanthrone, d'indanthrone, ainsi que des dérivés de systèmes cycliques aromatiques plus condensés, de préférence de la pyrènequinone, de l'anthanthrone, de la flavanthrone, de la pyranthrone, de l'acide tétracarboxylique de pérylène, de l'acide tétracarboxylique de naphtalène ainsi que des dérivés d'indigo et des dérivés de thioindigo.

3. Procédé selon la revendication 1 ou 2, **caractérisé en ce que** l'on utilise, dans le bain de teinture pour la réduction chimique des pigments colorés, du dithionite de sodium ou du sulfure de sodium dans une quantité de 10 à 90, de préférence 20 à 80% en poids, sur la base du colorant pur réductible.

4. Procédé selon les revendications 1 à 3, **caractérisé en ce que** l'addition du bain de teinture à la viscose est de 2 à 26, de préférence 3 à 9 litres pour 100 kg de viscose.

5. Procédé selon les revendications 1 à 4, **caractérisé en ce que** le bain de teinture contient en outre des pigments colorés non réductibles résistant à la lessive et aux acides dans une proportion de 3 à 12, de préférence 4 à 7% en poids, sur la base de la quantité totale de colorant et de pigment coloré.

6. Procédé selon les revendications 1 à 5, **caractérisé en ce que** le bain de teinture contient des éthers de cellulose, de préférence de la carboxyméthyl-cellulose et/ou de la méthylcellulose.

7. Emballage tubulaire pour aliments, en particulier emballage synthétique pour saucisses en non-tissé revêtu de cellulose régénérée avec une coloration transparente selon un procédé des revendications 1 à 6.

8. Emballage tubulaire pour aliments selon la revendication 7, **caractérisé en ce que** la surface extérieure et intérieure de l'emballage présente une couche-barrière étanche à la vapeur d'eau et à l'oxygène.

9. Utilisation de l'emballage tubulaire pour aliments selon l'une quelconque des revendications 7 ou 8 comme emballage synthétique de saucisses pour saucisse crue, saucisse à cuire dans l'eau bouillante ou saucisson.
